# EUROPEAN PATENT APPLICATION

(11) **EP 3 199 925 A1**
(43) Date of publication of application: **02.08.2017**
(21) Application number: 16153552.1
(22) Date of filing: 01.02.2016
(51) Int. Cl.: G01F 1/86, G01F 1/72, G01F 1/74

(54) **APPARATUS AND METHOD FOR MASS FLOW MEASUREMENT**

(71) Applicant: PROCES-DATA A/S, 8600 Silkeborg (DK)
(72) Inventor: NIELSEN, Ole Cramer, 8600 Silkeborg (DK)
(74) Representative: Gregersen, Niels Henrik

(57) **Abstract**

The present invention relates to a mass flow meter (10) for measuring the mass flow of a fluid flowing in a conduit (22) with upstream and downstream directions. The mass flow meter may comprise a density meter (40) configured to measure the density of the fluid in a density conduit (43) fluidly communicating with the conduit (22) and having a density conduit inlet (44) and a density conduit outlet (45). The mass flow meter may comprise a volumetric flow meter (60) configured to measure the volumetric flow of the fluid. The present invention also relates to a method of estimating the mass flow of a fluid.

The density conduit (43) may be configured to receive only a part of the flow in the conduit (22), while the volumetric flow meter (60) is configured to measure the whole of the flow in the conduit (22). A density conduit pump (50) may be provided to adjust the flow conditions in the density conduit (43), or alternatively the outlet (45) of the density conduit (43) may be located in or upstream a venturi (54), provided in the conduit (22). When a pump (30) is provided to drive the flow in the conduit (22), the density conduit outlet (45) may be placed upstream from the pump (30) and the density conduit inlet (44).

## Description

### Field of the Invention

The present invention relates to a mass flow meter for measuring the mass flow of a fluid flowing in a conduit with upstream and downstream directions. The mass flow meter may comprise a density meter configured to measure the density of the fluid in a density conduit fluidly communicating with the conduit and having a density conduit inlet and a density conduit outlet. The mass flow meter may comprise a volumetric flow meter configured to measure the volumetric flow of the fluid.

The present invention also relates to a method of estimating the mass flow of a fluid flowing in a conduit with an upstream and downstream direction, the method comprising acts of measuring the density of the fluid of only a part of the flow of the fluid in the conduit, measuring the volumetric flow of the fluid of the whole flow of the fluid in the conduit, and computing the mass flow as a function of the measured density and the measured volumetric flow.

### Background of the Invention

Estimates or measurements of characteristics of fluid flows are important for industries. Under ideal circumstances it may be possible to estimate certain characteristics of a fluid flow. Methods and devices for measuring for example the volumetric flow, the density and the mass flow of a fluid may be known individually.

However a practitioner will also recognize that measurement of individual flow characteristics requires specialised equipment that often also consumes a lot of space. Not only the equipment itself but also due to requirements in preparing or interfacing the flow to the actual flow measuring.

A practitioner will also be faced with flows that far from ideal. Physical parameters may vary in the fluid that flows. The content or composition of the fluid may vary; the temperature may vary and so forth. The flow profile may vary depending on circumstances.

On particular issue is with a flow of a fluid that ideally is a liquid (only), but where gas and often air is suspended in the liquid fluid.

Well known mass flow meters may be based on the Coriolis Effect, but they are inherently subject to miss readings to the actual liquid flow content when gas suspended in the fluid varies, and in particular when the content varies rapidly.

### Object of the Invention

It is an object of the present invention to overcome drawbacks of existing mass flow meters.

### Description of the Invention

An object is achieved by mass flow meter for measuring the mass flow of a fluid flowing in a conduit with upstream and downstream directions. The mass flow meter may comprise a density meter configured to measure the density of the fluid in a density conduit and having a density conduit inlet and a density conduit outlet. The mass flow meter may comprise a volumetric flow meter configured to measure the volumetric flow of the fluid.

The mass meter may comprise computational means configured to determine the mass flow as a function of the measured density and the volumetric flow.

Thereby is provided a flow meter that provides multiple flow characteristics of the same fluid flow. Furthermore is provided a mass meter, which is insensitive to the gas content of a fluid with liquid and gas.

A further effect is that the arrangement minimises or eliminates the need for additional equipment to eliminate or reduce the gas content in the fluid prior to performing fluid flow characterisation or measurements.

A further effect is that arrangement allows for multiple characterisation of the fluid flow, where one flow characteristic may be more accurate than another and thus such more accurately estimated characteristic may be used to validate the other flow characteristics better.

To a practitioner it is understood that the fluid typically is a liquid fluid. Ideally the fluid characterisation is of a liquid, which however in practical use may or may not have a gas content or component. The gas content may vary over time or in nature. The gas may be larger "bubbles" that could be removed using additional equipment. The gas may have be whisked or whipped into the liquid, making it impossible or very tedious to remove. Degassing may require a dedicated tank and/or simply delay or complicate the measurements.

One example is milk which ideally is a liquid, but which in practice during handling, during processing, or during metering inevitable will be subjected to air, which easily becomes whisked into the milk and thus suspended in the milk eventual forming whipped milk and even whipped cream.

Other similar examples may be in dairy products, beverages or from the food industry, but such areas are not limited.

The conduit may be a pipe or fluid communication line. It is understood that the conduit may be transfer or guide fluid in direction from A to B, where A is upstream and B is downstream. The conduit may have a conduit part, which is for density estimation and a part that is for volumetric flow estimation. The density conduit may be a separate conduit. It is understood that the interface to each part may be named an inlet where the fluid flows into the part and an outlet where the fluid flows out of the part. In principle an inlet or an outlet may be a cross section of a flow or a part of a cross section. An inlet or an outlet may be a physical connection of a distinct conduit or piece of pipework.

The computational means may be a processor or a computer, but the computational means may also be an analogue device preforming the required operation based on the volumetric flow measurement and the density measurement.

One simple function is to divide measured volumetric flow with the density measurement. Thereby is achieved an estimate of the mass flow.

In the case where the fluid is a liquid with a suspended gas, the volumetric flow measurement will include the gas. The density measurement also includes the content of gas.

The misreading, caused by gas, may "cancel" out each other when the two measurements are functionally operated to estimate the mass flow, which then may represent the mass flow of the liquid part of the fluid. Thus the mass of the liquid may be estimated more accurately and/or independently of the gas content, which may vary or disappear through degassing over time.

In an aspect, the mass flow meter may comprise a density meter that is configured to measure the density in the density conduit configured to receive only a part of the fluid flowing in the conduit and the volumetric flow meter is configured to measure the volumetric flow of the whole of the fluid flowing in the conduit.

A volume of the fluid has a density and the volume will flow with the fluid. As such the density measurement is considered to be time dependent and of the whole or a part of a volume of fluid the volumetric flow measured at a time.

Thereby allowing for a precise measurement of the volumetric flow and at the same time a measurement of the necessary to achieve a precise measurement of the density requiring less space and in a conduit where the flow speed can be adjusted to achieve a better density estimate. The flow speed in the density conduit may advantageously be reduced. Thus the volumetric flow estimate includes possible gas and at the same time the density estimate includes the same possible gas enabling the gas content to be eliminated from the mass estimate.

The density conduit may be a conduit separated or diverted from the main conduit. The diversion may be through a density conduit inlet and the diverted flow may be returned to the main conduit via a density conduit outlet. As such the inlet may be an outtake and the outlet may be a return.

In an embodiment the density conduit has an insert into the main conduit and an opening facing the flow in in the main conduit. The insert may be formed according to the flow or the expected flow in the conduit. The opening may define the part of the whole flow in the main conduit. The opening or inlet may be shaped with a circular cross section, a rectangular or square form factor. The density conduit part in the main conduit may have a form factor minimising the impact on the flow field in the main conduit. The density conduit outside the conduit or the flow field may be formed to adjust the flow speed in the density conduit. The density conduit may be formed with bends and a form factor suitable for a particular use or fluid. The density conduit may be a U-tube with one or more loops.

In an aspect of the mass flow meter there is density conduit pump between the density meter and density conduit outlet.

Thereby the fluid characteristics such as pressure and temperature and/or the flow speed in the density conduit can be adjusted to allow for better conditions to measure the density. Also the flow characteristics of the return flow from the density conduit to the main conduit can be adjusted.

In an aspect of the mass flow meter, the density conduit outlet is in or upstream of a venturi in the conduit. The venturi may be upstream from the density outtake.

The venturi may be used to condition or adjust the flow characteristics in the conduit to achieve a desired flow and to regulate pressure. The return of fluid from the density conduit may be into the passageway of the venturi. Alternately, the return of fluid may be upstream of the venturi to mix the flow and make the venturi condition the flow characteristics downstream of the venturi.

In an aspect of the mass flow meter, the density conduit has the density conduit inlet located just before a volumetric flow conduit inlet of the volumetric flow conduit. Alternatively the density conduit inlet may be located just after a volumetric flow outlet of the volumetric flow conduit.

A person skilled in the art will appreciate that the location just before the volumetric flow conduit inlet may be determined or adjusted according to pressure conditions in the flow path upstream. As such and under flow conditions where the pressure is substantially stable upstream from the volumetric flow conduit inlet, the location can be in such stable pressure regime.

Likewise the density conduit inlet may be placed just after the volumetric flow conduit outlet. Again a person skilled in the art will appreciated that stable pressure conditions downstream from the volumetric conduit outlet may determine the actual location of the intake to the density conduit.

In an aspect of the mass flow meter, the density conduit has a density conduit outlet configured to return fluid to the conduit upstream from the density conduit inlet.

This allows for the density conduit inlet to be placed close, i.e. with identical or similar flow and pressure characteristics to those characteristics at the inlet to the volumetric flow inlet and to return the fluid to remix with the fluid.

In an aspect of the mass flow meter it may further comprise a conduit pump configured regulate pressure in the conduit upstream to the volumetric flow meter and upstream to the density conduit inlet.

Thereby is provided means to adjust and prepare flow and pressure characteristics that are favourable for the density measurements and the volumetric flow measurements.

In an aspect of the mass flow meter, the density conduit outlet is upstream to the conduit pump.

This allows for flow and pressure characteristics to be similar at the respective density conduit inlet and volumetric flow conduit inlet since the effect of the return of fluid from the density conduit is minimised or reduced.

In an aspect of the mass flow meter the computational means are configured to collect and store a volumetric time series of one or more volumetric flow measurement.

The computational mean may also be configured to collect and store a density time series of one and more density measurements. The computational means may also be configured to determine the mass flow as a function of density time series and volumetric time series delayed with respect to each other.

In one aspect more respective data may be favourably be collected and stored to estimate the respective volumetric and density s using more data or more advanced methods or algorithms for estimating the respective fluids.

In one aspect a fluid volume or a particle may be in a volume that at one time is measured by either the volumetric or density meter, and at another time is measured by the other meter. Such delay may be compensated for or calibrated.

In one aspect estimation of one volumetric or density may take longer due to requirements in processing or due to flow and fluid conditions. Thus a delay may compensate for such delays in the output from computing a measure or result.

For example the density meter is upstream to the volumetric flow meter and the density meter needs longer time series than the time series needed for the volumetric flow meter to produce a sufficiently accurate result. Hence the density measurement may be delayed a certain time period. Thus the volumetric flow measurement may advantageously be delayed according to the time period to achieve coherent estimates or measurements.

The actual delays may be adjusted according to particular fluids and implementation and the delay may be determined as part of a calibration procedure. The delay may also be automated or regulated.

In an aspect of the mass flow meter the volumetric flow meter is a magnetic induction type of volumetric flow meter.

The volumetric flow meter may be an electromagnetic flow meter as known by the practitioner. The flow meter may be configured for volumetric flow measurements of electrically conductive fluids flowing in an existing pipework or conduit. Thus, the flow meter may be configured to be inserted into the existing pipework or conduit and for guiding a fluid in a flow direction from an inlet to an outlet in a section with cross-section that may be square or with any other suitable geometry. Furthermore, the flowmeter comprises magnetic means arranged to provide a magnetic field in the cross section of the metering conduit. There may be arrangements of electrodes configured to constitute part of the metering piper and to be arranged within the magnetic field when provided. The electrodes may be arranged with means to measure a voltage across the electrodes.

The scope of the electromagnetic flow meter generally relate to metering of conductive fluids.

In an aspect of the mass flow meter, the density meter is a vibrating tube type of density meter type of apparatus.

An aspect of the invention is achieved by a method of estimating the mass flow of a fluid flowing in a conduit with an upstream and downstream direction, the method comprising an act of measuring the density of the fluid of only a part of the flow of the fluid in the conduit. There may be an act of measuring the volumetric flow of the fluid of the whole of the flow of the fluid in the conduit. There may be an act of computing the mass flow as a function of the measured density and the measured volumetric flow.

Thereby is provided a flow meter that provides multiple flow characteristics of the same fluid flow. Furthermore is provided a mass meter, which is insensitive to the gas content of a fluid with liquid and gas.

A further effect is that the arrangement minimises or eliminates the need for additional equipment to eliminate or reduce the gas content in the fluid prior to performing fluid flow characterisation or measurements.

Thereby allowing for a precise measurement of the volumetric flow and at the same time a measurement of the necessary to achieve a precise measurement of the density requiring less space and in a conduit where the flow speed can be adjusted to achieve a better density estimate. The flow speed in the density conduit may advantageously be reduced. Thus the volumetric flow estimate includes possible gas and at the same time the density estimate includes the same possible gas enabling the gas content to be eliminated from the mass estimate.

In an aspect of the method, the act of measuring the volumetric flow is performed by a magnetic induction type of volumetric flow meter.

The use of a magnetic induction type of volumetric flow meter involves establishment of a magnetic field across the conduit and measurement of the electrically induced voltage when a fluid passes through the conduit. The conduit may have geometry so that the induced voltage is proportional to the fluids average flow rate and thus giving the volumetric flow. The use of a conduit with a square cross section may reduce the need for calibration and thus result in highly reliable volumetric flow estimates.

An object of the invention may be achieved by a method of performing a volumetric flow measurement of electrically conductive fluids flowing in a pipe through a pipe cross section in a flow direction. Such method may comprise acts of providing at least one magnetic field in a cross section of the pipe in a magnetic direction and of measuring at least one voltage across a pair of electrodes having am electrode pair direction to obtain at least three different directions of magnetic direction and electrode pair direction. Also comprised in the method may be the act of estimating the volumetric flow of electrically conductive fluids as a function of at least two different combinations of magnetic directions and electrode pair directions.

In an aspect of the method, the act of computing the mass flow may comprise an act of collecting and storing a volumetric time series of one or more volumetric flow measurements. There may be an act of collecting and storing a density time series of one and more density measurements. Finally, there may be an act of computing the mass flow as a function of density time series and the volumetric time series delayed with respect to each other.

Thus respective volumetric flow and density estimates can be estimated to the best of each metering types. In particular act of volumetric flow measurement can be optimised essentially independent of the density measurement by allowing for tailoring the flow conditions to optimise volumetric flow measurement and allow for the required or necessary data to be collected, stored and processed.

Likewise the act of density measurement can be optimised essentially independent of the volumetric flow measurement by allowing for the flow of only a part of the fluid to be tailored to flow conditions to optimise density measurement and allow for the required or necessary data to be collected, stored and processed.

The use of a delay between the respective time series or the processed respective time series will advantageously improve the final estimate of the mass flow and or increase the range of fluids or fluid/flow conditions such as flow rate, temperature or pressure.

In an aspect of the method, there may be a further act of evaluating the accuracy of the estimated mass flow as a function of the measured volumetric flow, the measured density , the estimated mass flow or combinations thereof by comparing measured and estimated values to previously collected values.

The independent estimates of respective volumetric flow, density and the functionally determined mass flow allows for assessing the validity or accuracy of respective measures under respective optimised conditions and thereby effectively allow for indications of changes in fluid and flow characteristics that would otherwise remain unseen or undetected.

The scope is not limited to any particularly mentioned example herein. Such example is only for illustrative purpose and persons skilled in the art of flow metering will readily be able to adjust the teachings disclosed herein to a particular type of flow. Such particular flow may be food or dairy fluids such as milk or cream, and other conductive fluids.

### Description of the Drawing

Embodiments of the invention will be described in the figures, whereon:
- Fig. 1: illustrates an arrangement of a mass flow meter comprising a density meter and a volumetric flow meter;
- Fig. 2: illustrates an arrangement of a mass flow meter with a density meter measuring a part of a flow and the volumetric flow meter measuring the whole of the flow;
- Fig. 3: illustrates different embodiments of arrangements of a density meter and a volumetric flow meter;
- Fig. 4: illustrates different embodiments of arrangements of a density meter and a volumetric flow meter;
- Fig.5: illustrates A) an embodiment of a computational device for estimating the mass flow as a function of a volumetric flow measurement and a density measurement; and B) an embodiment where time series are collected and the mass flow is estimated as a function where a delay in one time series is introduced;
- Fig. 6: illustrates act in a method of estimating the mass flow; and
- Fig. 7: illustrates a further act of introducing a delay between time series in a method of estimating the mass flow.

**Detailed Description of the Invention**

| **Number** | **Term** |
|---|---|
| 10 | Mass flow meter |
| 12 | Mass flow |
| 20 | Fluid |
| 22 | Conduit |
| 24 | Upstream |
| 25 | Downstream |
| 26 | Part of the flow [of fluid] |
| 27 | Whole of the flow [of fluid] |
| 30 | Conduit pump |
| 40 | Density meter |
| 42 | Density |
| 43 | Density conduit |
| 44 | Density conduit inlet |
| 45 | Density conduit outlet |
| 50 | Density conduit pump |
| 54 | Venturi |
| 60 | Volumetric flow meter |
| 62 | Volumetric flow |
| 63 | Volumetric flow conduit |
| 64 | Volumetric flow conduit inlet |
| 65 | Volumetric flow conduit outlet |
| 80 | Computational means |
| 82 | Volumetric flow measurement |
| 83 | Volumetric time series |
| 84 | Density measurement |
| 85 | Density time series |
| 86 | Function |
| 90 | Delay |
| 100 | Method of estimating the mass flow |
| 102 | Estimated mass flow |
| 110 | Measuring the density |
| 120 | Measuring the volumetric flow |
| 130 | Computing the mass flow |
| 132 | Collecting and storing |
| 134 | Delayed |

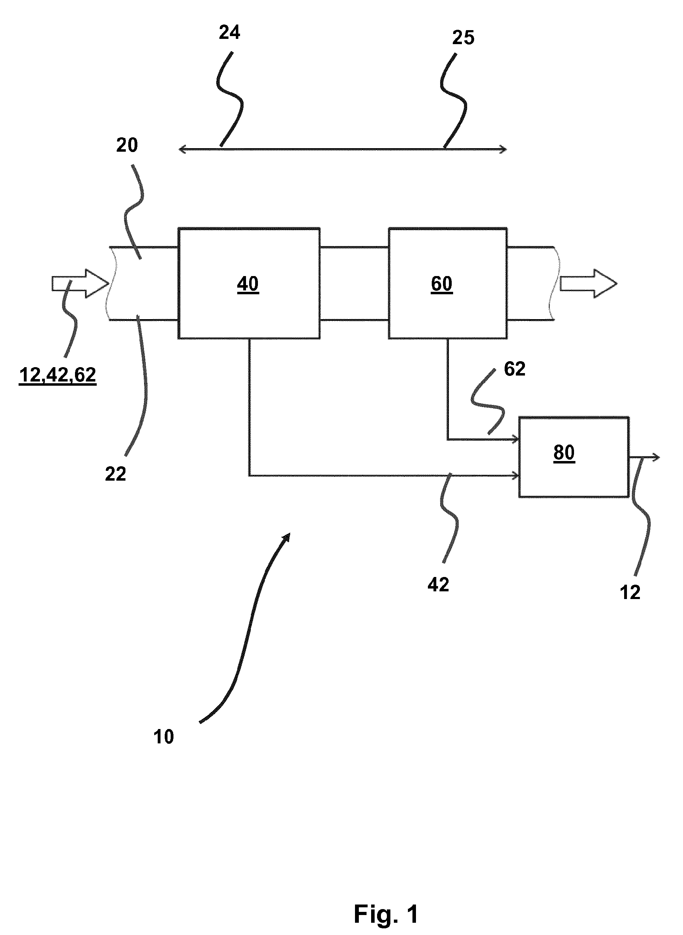

Fig. 1 illustrates a mass flow meter 10 for measuring the mass flow 12 of a fluid 20 flowing in a conduit 22 with upstream 24 and downstream 25 directions. The fluid 20 is characterised by a mass flow 12, a density 42 and a volumetric flow 62.

The mass flow meter 10 comprises a density meter 40 configured to measure the density 42 of the fluid 20. The mass flow meter 10 further comprises a volumetric flow meter 60 configured to measure the volumetric flow 62 of the fluid 20. The density meter 40 and the volumetric flow meter 60 are connected to computational means 80 configured to determine the mass flow 12 as a function of the measured or estimated density 42 and the volumetric flow 62.

In the shown embodiment the density meter 40 is upstream 24 to the volumetric flow meter 60, but the arrangement could have the density meter 40 downstream 25 to the volumetric flow meter 60.

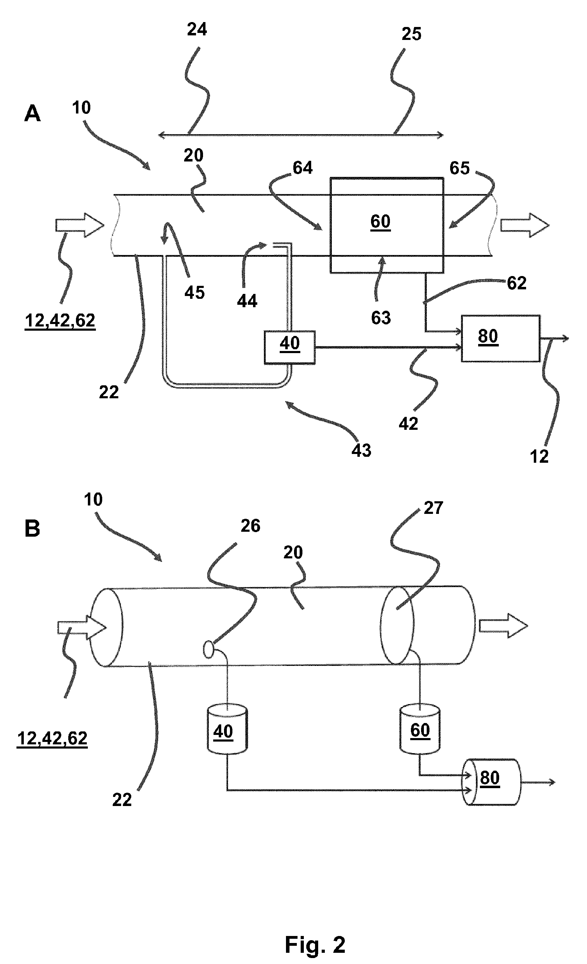

Fig. 2A and B illustrates an arrangement of a mass flow meter 10 with a density meter 40 measuring a part of a flow 26 and the volumetric flow meter 60 measuring the whole of the flow 27. The shown mass flow meter 10 has the density meter 40 and downstream 25 the volumetric flow meter 60.

The density meter 40 is connected to the conduit 22 via a density conduit 43 having a density conduit inlet 44 here configured upstream 24 to the volumetric flow meter 60 and a density conduit outlet 45 here configured upstream 24 to the density conduit inlet 44. The density conduit 43 is here configured as a conduit external or outside of the main conduit 22. The density conduit inlet 44 is configured to only receive a part of the flow 26 of the flow in the in conduit 22.

The volumetric flow meter 60 is in this embodiment downstream 25 to the density meter 40 and the volumetric flow meter 60 has a volumetric flow conduit 63 that is a section of the conduit 22. The volumetric flow conduit 63 has a volumetric flow conduit inlet 64 configured to collect the whole of the flow 27 of the flow in the conduit 22. Furthermore there is a volumetric flow conduit outlet 65. The volumetric flow conduit 65 may have a particular cross section to support the volumetric flow measurement.

The density meter 40 estimates or measures the density 42 based on the part of the flow 26 and the result is transferred to the computational means 80.

The volumetric flow meter 60 estimates or measures the volumetric flow 62 based on the whole part of the flow 27 and the result is transferred to the computational means 80 for computing the mass flow 12 of the fluid 20.

Fig. 2B illustrates the mass flow meter 10 emphasising or illustrating that the density meter 40 is configured to only collect and measure only a part of the flow 26 of the flow in the conduit 22 and that the volumetric flow meter 60 is configured to collect and measure the whole of the flow 27 of the flow in the conduit 22. The density conduit inlet 44 may have a cross section facing the flow direction that is only a part of the whole cross section of the conduit 22. The volumetric flow conduit inlet 64 may have a cross section facing the flow direction that is the whole cross section of the conduit 22 at the collection point.

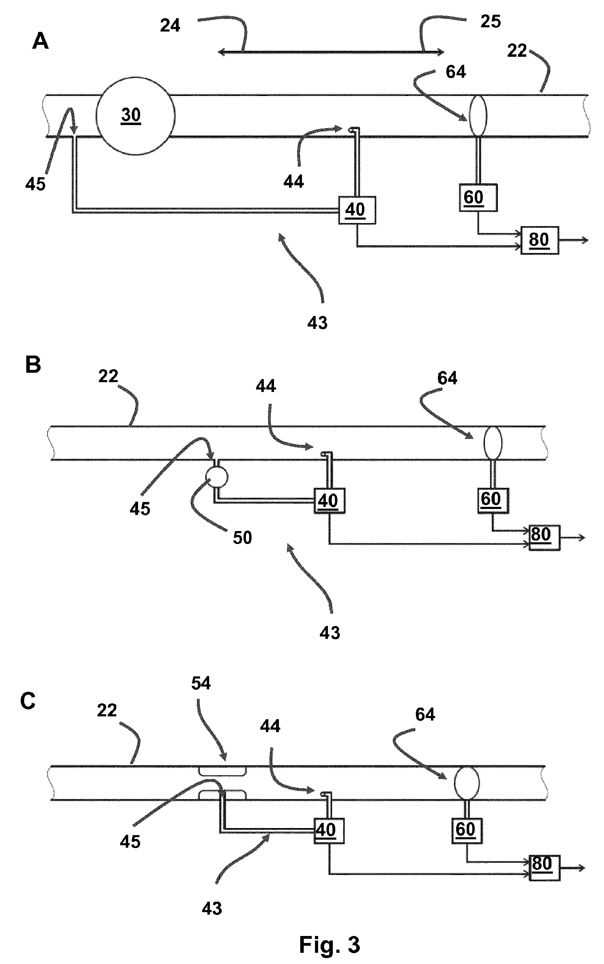

Fig. 3 illustrates different embodiments of arrangements of a density meter 40 and a volumetric flow meter 60 forming the mass flow meter 10. For all embodiments the flow direction is similar to the flow direction of the previous figures and the upstream 24 and downstream 25 are indicated.

Fig. 3A illustrates an embodiment with a main conduit pump 30 upstream 24 to the density meter 40, which again is upstream 24 to the volumetric flow meter 60. In particular the pump 30 is upstream to the density conduit inlet 44, which is upstream to the volumetric flow conduit inlet 64. The density conduit outlet 45 is upstream 24 to the pump 30.

Fig. 3B illustrates an embodiment with a density meter 40 upstream 24 to a volumetric flow meter 60 and thus where the density conduit inlet 44 is upstream 24 to the volumetric flow conduit inlet 64. The density conduit 43 is a conduit outside of the main conduit 22 and the density conduit outlet 45 is upstream to the density conduit inlet 44. In a particular embodiment there is a density conduit pump 50 in the density conduit 43.

Fig. 3C illustrates an embodiment with a density meter 40 upstream 24 to a volumetric flow meter 60 and with the density conduit inlet 44 upstream 24 to the volumetric flow conduit inlet 64. Upstream 24 from the density conduit inlet 44 there is a venturi 54, which in this particular embodiment has the density conduit outlet 45 connected to return the fluid from the density conduit 43 the conduit 22.

In the embodiments 3A, B and C, the density conduit inlet 44 upstream 24 to the volumetric flow conduit inlet 64. The density conduit inlet 44 may be just before the volumetric flow conduit inlet 64. The density conduit inlet 44 may be places upstream 24 from the volumetric flow conduit inlet 64 where the pressure or temperature of the fluid is substantially the same.

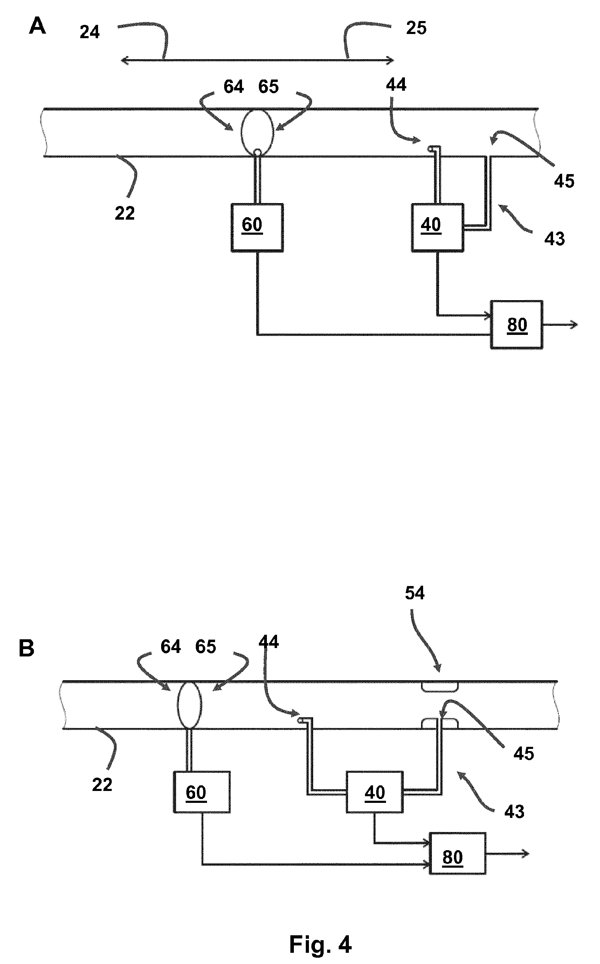

Fig. 4 illustrates different embodiments of arrangements of a density meter 40 and a volumetric flow meter 60 forming a mass flow meter 10.

Fig. 4A illustrates an embodiment with a density meter 40 downstream 25 to a volumetric flow meter 60. In particular the density conduit inlet 44 is downstream to the volumetric flow conduit outlet 65. The density conduit outlet 45 is furthermore downstream 25 to the density conduit inlet 44.

Fig. 4B illustrates an embodiment with a density meter 40 downstream 25 to a volumetric flow meter 60. The density conduit inlet 44 is downstream 25 to the volumetric flow conduit outlet 65. Furthermore there is a venturi 54 downstream of the volumetric meter 60. In this embodiment the venturi 54 is downstream 25 to the density conduit inlet 44. The venturi 54 has the density conduit outlet 45 leading into the flow channel of the venturi 54 and returning fluid to the conduit 22.

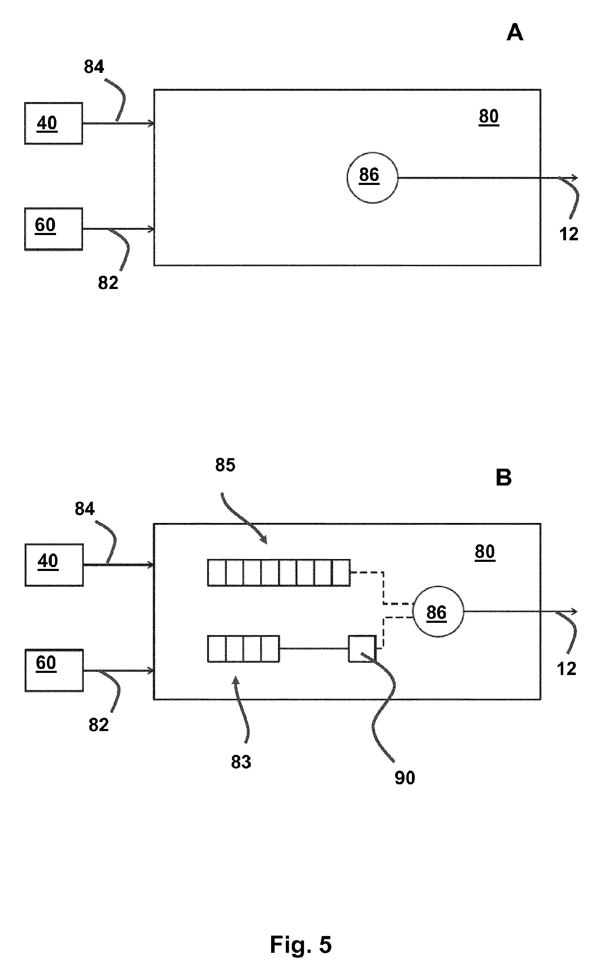

Fig. 5 illustrates A) an embodiment of a computational device for estimating the mass flow as a function of a volumetric flow measurement and a density measurement; and B) an embodiment where time series are collected and the mass flow is estimated as a function where a delay in one time series is introduced.

Fig. 5A illustrates a density meter 40 giving a density measurement 84 and a volumetric flow meter 60 giving a volumetric flow measurement 82. The computational means 80 is configured to determine or estimate the mass flow 12 as a function 86 of the measured density 84 and the volumetric flow 82. The function may be a multiplication type of operation.

Fig. 5B illustrates 5A illustrates a density meter 40 giving a density measurement 84 or a series or stream thereof a volumetric flow meter 60 giving a volumetric flow measurement 82 or a series or stream thereof.

The computational unit 80 is configured to collect and store the volumetric flow measurement 82 as a volumetric time series 83 and to collect and store the density measurement 83 as a density time series 85. Optionally the computational unit 80 may be configured with delay 90 means to delay the respective time series 83, 85 with respect to each other.

In embodiments the time series 83, 85 may be pre-processed to obtain volumetric flow estimates and density estimates that subsequently are used to calculate the mass flow 12.

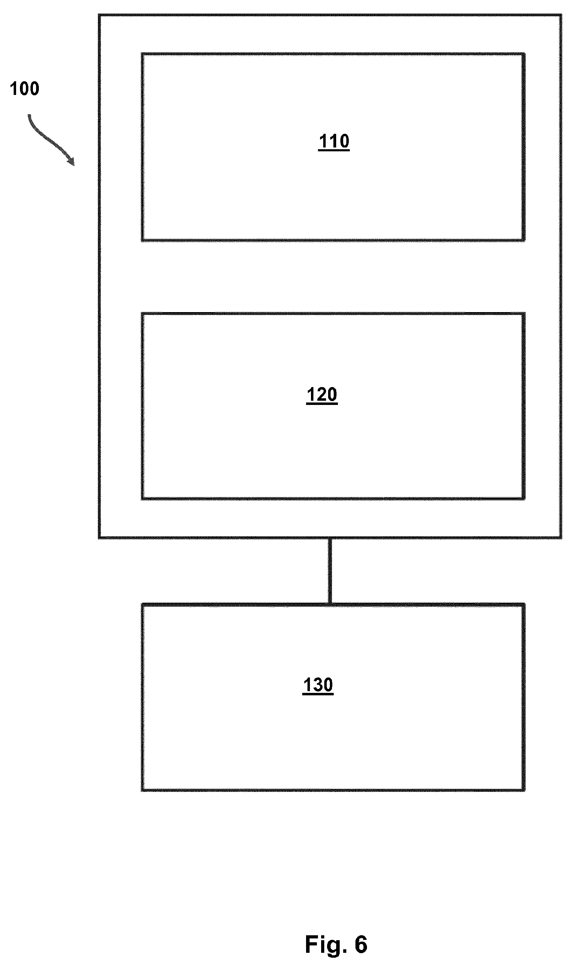

Fig. 6 illustrates acts in a method of estimating the mass flow 100. The method of estimating the mass flow 100 of a fluid flowing in a conduit with an upstream and downstream direction comprises acts of measuring the density 110 of the fluid 20 of only a part of the flow of the fluid in the conduit. The method 100 further comprises an act of measuring the volumetric flow 120 of the fluid of the whole of the flow of the fluid in the conduit. Finally the method comprises an act of computing the mass flow 130 as a function of the measured density 110 and the measured volumetric flow 120.

In an exemplary method the act of measuring the volumetric flow 120 involves the use of a magnetic inductive type of volumetric flow meter. The act of measuring the density 110 may involve the use of a vibration tube type of density meter.

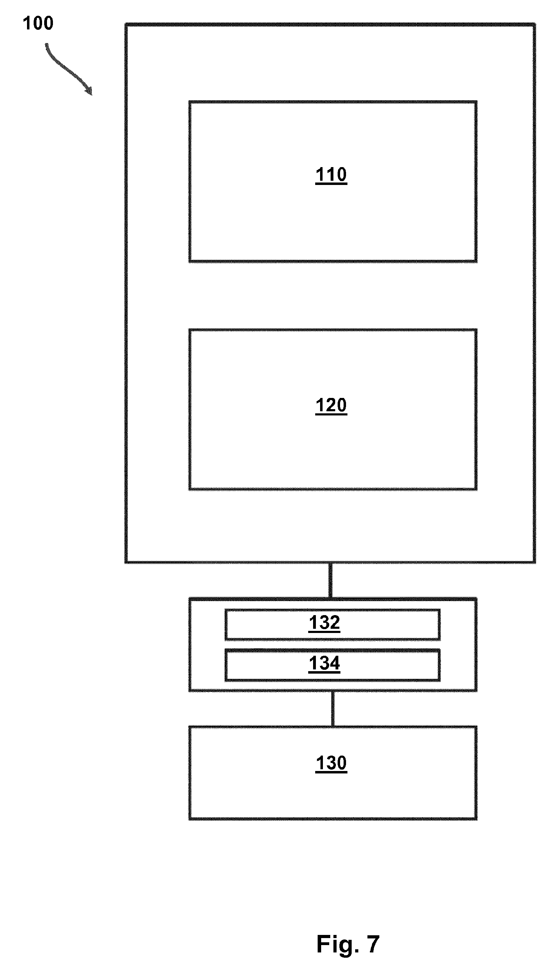

Fig. 7 illustrates a further act of introducing a delay between time series in a method of estimating the mass flow 100.

The act of computing the mass flow 130 comprises acts of collecting and storing 132 a volumetric time series of one or more volumetric flow measurements and collecting and storing a 132 density time series of one and more density measurements. The act of computing the mass flow 130 as a function of density time series and the volumetric time series may involve the time series to be delayed 134 with respect to each other.

## Claims

1. A mass flow meter (10) for measuring the mass flow (12) of a fluid (20) flowing in a conduit (22) with upstream (24) and downstream (25) directions, the mass flow meter (10) comprising:
- a density meter (40) configured to measure the density (42) of the fluid (20) in a density conduit (43) fluidly communicating with the conduit (22) and having a density conduit inlet (44) and a density conduit outlet (45);
- a volumetric flow meter (60) configured to measure the volumetric flow (62) of the fluid (20); and
- computational means (80) configured to determine the mass flow (12) as a function of the measured density (42) and the volumetric flow (62).

2. The mass flow meter (10) according to claim 1, **characterised in that** the density meter (40) is configured to measure:
- the density (42) in the density conduit (43) configured to receive only a part of the flow (26) of the fluid (20) in the conduit (22) and
- the volumetric flow meter (60) is configured to measure the volumetric flow (62) of the whole of the flow (27) of the fluid (20) in the conduit (22).

3. The mass flow meter (10) according to claim 1 or 2, **characterised in that** there is density conduit pump (50) between the density meter (40) and density conduit outlet (45).

4. The mass flow meter (10) according to any of claim 1 to 3, **characterised in that** the density conduit outlet (45) is in or upstream (24) of a venturi (54) in the conduit (22).

5. The mass flow meter (10) according to any of claim 1 to 4, **characterised in that** the density conduit (43) has the density conduit inlet (45)
- located just before a volumetric flow conduit inlet (64) of the volumetric flow conduit (63); or
- located just after a volumetric flow outlet (65) of the volumetric flow conduit (63).

6. The mass flow meter (10) according to any preceding claim, **characterised in that** the density conduit (43) has a density conduit outlet (45) configured to return fluid to the conduit (22) upstream (24) from the density conduit inlet (44).

7. The mass flow meter (10) according to any preceding claim, **characterised in** further comprising a conduit pump (30) configured regulate pressure in the conduit (20) upstream (24) to the volumetric flow meter (60) and upstream (24) to the density conduit inlet (44).

8. The mass flow meter (10) according to claim 4 or 5, **characterised in that** the density conduit outlet (45) is upstream (24) to the conduit pump (30).

9. The mass flow meter (10) according to any preceding claim **characterised in that** the computational means (80) are configured
- to collect and store a volumetric time series (82) of one or more volumetric flow measurements (81);
- to collect and store a density time series (84) of one and more density measurements (83); and to determine the mass flow (12) as a function of density time series (84) and volumetric time series (86) delayed with respect to each other.

10. The mass flow meter (10) according to any preceding claim **characterised in that** the volumetric flow meter (60) is a magnetic induction type of volumetric flow meter (10).

11. The mass flow meter (10) according to any preceding claim **characterised in that** the density meter (40) is a vibrating tube (oscillating U-tube) type of density meter type of apparatus.

12. Method of estimating the mass flow (100) of a fluid (20) flowing in a conduit (22) with an upstream (24) and downstream (25) direction, the method (100) comprising acts of:
- measuring the density (110) of the fluid (20) of only a part of the flow of the fluid (20) in the conduit (22);
- measuring the volumetric flow (120) of the fluid (20) of the whole of the flow of the fluid (20) in the conduit (22);
- computing the mass flow (130) as a function of the measured density (110) and the measured volumetric flow (120).

13. The method (100) of claim 12 **characterised in that** the act of measuring the volumetric flow (110) is performed by a magnetic induction type of volumetric flow meter.

14. The method (100) of claim 12 or 13 **characterised in that** the act computing the mass flow (130) comprises acts of
- collecting and storing (132) a volumetric time series (83) of one or more volumetric flow measurements (82);
- collecting and storing a (132) density time series (85) of one and more density measurements (84); and
- computing the mass flow (130) as a function of density time series (85) and the volumetric time series (83) delayed (134) with respect to each other.

15. The method (100) of any of claim 12 to 14 **characterised in** further comprising an act of evaluating the accuracy of the estimated mass flow (102) as a function of the measured volumetric flow (120), the measured density (130), the estimated mass flow (102) or combinations thereof by comparing measured and estimated values to previously collected values.
